# EUROPEAN PATENT SPECIFICATION

(11) **EP 3 864 379 B1**
(45) Date of publication and mention of the grant of the patent: **26.06.2024**
(21) Application number: 19790453.5
(22) Date of filing: 11.10.2019
(51) Int. Cl.: G01F 1/66, G01L 9/00, G01L 19/00, G01L 19/12, G01F 15/14, G01F 15/18

(54) **ELECTRONIC FLOW METER WITH PRESSURE SENSOR**
ELEKTRONISCHER DURCHFLUSSMESSER MIT DRUCKSENSOR
DÉBITMÈTRE ÉLECTRONIQUE À CAPTEUR DE PRESSION

(30) Priority: 11.10.2018 DK PA201870666
(43) Date of publication of application: 18.08.2021
(73) Proprietor: KAMSTRUP A/S, 8660 Skanderborg (DK)
(72) Inventor: LAURSEN, Peter Schmidt, 8660 Skanderborg (DK); CHRISTIANSEN, Uffe, 8660 Skanderborg (DK)
(74) Representative: Plougmann Vingtoft a/s
(86) International application number: PCT/DK2019/050313
(87) International publication number: WO 2020/074050

(56) References cited:
- EP-A1- 3 367 074
- WO-A1-2008/053193
- WO-A1-2018/011372
- DE-A1- 19 713 526
- DE-A1-102012 209 149
- JP-A- 2017 096 979
- US-A1- 2008 271 543

## Description

### FIELD OF THE INVENTION

The present invention relates to an electronic flow meter including a flow sensor and a pressure sensor, wherein a pair of ultrasound transducers of the flow sensor and a ceramic pressure sensor element are surface mounted to one or more printed circuit boards arranged in a housing of the flow meter.

### BACKGROUND OF THE INVENTION

Smart metering system for use in water distribution-networks enables an increasing amount of data to be measured, collected and analyzed. In addition to consumption data, other relevant data may be pressure, temperature, noise, etc. By analyzing the data, important insights into the state and operation of the network can be obtained. For example, leaks may be identified by analyzing noise and pressure changes, or pressure may be monitored to be able to reduce pumping power. To be able to gather such data in an efficient and cost-effective manner, it is advantageous to integrate sensors in smart meters or electronic flow meter that are distributed throughout the distribution-network. Hereby, the infrastructure for collecting data provided by the meters, can be exploited to also collect sensor data.

However, integration of sensors in an electronic flow meter may be restricted by space constrains and the risk of interference with flow meter operation. Further, sensors must be robust and have a lifetime of preferably 10-20 years without the need for periodic maintenance.

EP3367074A1 relates to an electronic flow meter comprising a housing formed by a polymer structure, the housing including a compartment and a flow tube. The electronic flow meter components are protected from ingress of water from the distribution-network or the surrounding environment.

WO200b053193A1 relates to an electronic flow meter, wherein ultrasonic transducers and a pressure sensor are coupled to a flexible printed circuit board.

JP2017096979A relates to an electronic flow meter comprising a temperature sensor, a pressure sensor and an ultrasonic flow meter. The ultrasonic transducers are arranged on an inner sleeve.

DE19713526A1 discloses an electronic flow meter comprising a pressure sensor and an ultrasonic flow meter. The ultrasonic transducers are arranged on an inner sleeve.

### OBJECT OF THE INVENTION

An object of the present invention is to provide an alternative to the prior art. More specifically, it may be seen as a further object of the present invention to provide a flow meter with a built-in pressure sensor operationally connected to the flow meter control electronics.

### SUMMARY OF THE INVENTION

Thus, the above described object and several other objects are intended to be obtained in a first aspect of the invention by providing an electronic flow meter according to claim 1.

### BRIEF DESCRIPTION OF THE FIGURES

The electronic flowmeter according to the invention will now be described in more detail with regards to the accompanying figures. The figures show one way of implementing the present invention and is not to be construed as being limiting to other possible embodiments falling within the scope of the attached claim set.
Figure 1 shows a cross-section of one embodiment of a flow meter,
Figure 2 shows an embodiment of an electronics housing of a flow meter,
Figure 3 shows and exploded view of a flow meter,
Figure 4 shown a cross-section of another embodiment of a flow meter,
Figure 5 shows an exploded view of a separate flow meter and pressure sensor PCB,
Figure 6 shows a flow meter PCB provided with a pressure sensor PCB,
Fig. 7 shows a cross-section of Fig. 6 along line AA,
Figure 8 shown a cross-section of a flow meter housing, and
Figure 9 shows another embodiment of an electronics housing of a flow meter.

### DETAILED DESCRIPTION OF AN EMBODIMENT

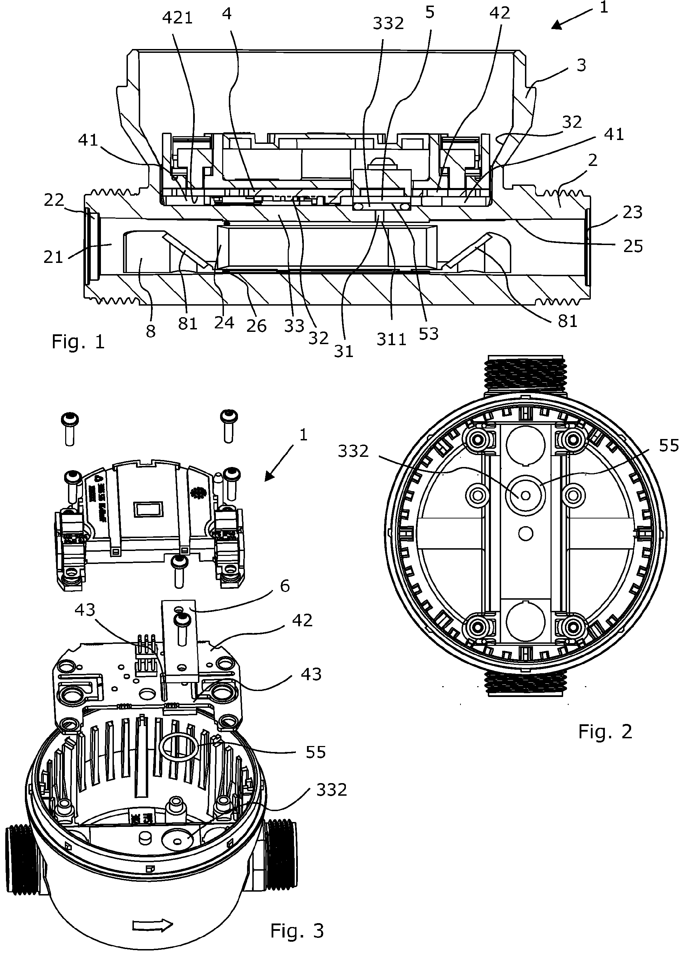

Fig. 1 shows an electronic flow meter 1, such as a water meter for installation as part of a utility infrastructure. The electronic flow meter is configured for measuring fluid flow as well fluid pressure of a fluid flowing through the utility infrastructure. The flow meter comprises a flow tube 2 provided with flow channel 21 extending between an inlet 22 and an outlet 23 adapted for being connected to the utility infrastructure and the piping system at a consumption side, respectively.

In the shown embodiment, an electronics housing 3 and the flow tube are provided as a monolithic polymer structure, the flow tube being defined by a first wall and the housing being partly defined by a second circumferential wall forming a housing opening, wherein the first wall separates an inner bore of the flow tube from an inner compartment of the housing. However, in other embodiments, the electronics housing may be formed as a separate element and subsequently mounted on or otherwise connected to the flow tube. The electronics housing and/or flow tube is advantageously made by injection molding and of a polymer material, such as a glass fiber reinforced polyphenylene sulfide with a 20-40% fiber content. Additionally, the housing is closed off by a cover (not shown) configured for sealed engagement with the housing opening to provide a fluid-tight enclosure.

Inside the electronics housing a flow sensor 4 is arranged. The flow sensor includes a pair of ultrasound transducer elements 41 mounted on a main printed circuit board (PCB) 42. The main PCB may be of a one- or more layer structure provided with surface mounted devices and/or circuits on one or both of its upwards- and downwards facing sides (421, 422). The flow sensor is configured for operating the ultrasound transducers to transmit and receive ultrasound signals through a fluid flow in the flow channel and to determine a flow rate of the fluid based on the time of flight of the transmitted and received ultrasound signals.

Additionally, a pressure sensor 5 including a sensor element 51 is arranged inside the electronics housing. A top-side 53 of the sensor element is arranged in fluid communication with the flow channel via a sensor bore 31 provided in an inner surface 32 of the electronics housing. The sensor bore extends between the flow channel and the inside of the electronics housing through a wall of the flow tube 33 and the electronics housing. Further, a backing device 6 is provided to force the sensor element against a sealing element 55 arranged to provide a fluid tight sealing between the sensor element and the inner surface of the electronic housing.

In one embodiment the sensor element is a ceramic sensor element and the ceramic pressure sensor is a capacitive sensor including layers of ceramic material provided with electrodes. The top-side of the sensor element is constituted by a layer of ceramic material functioning as a flexible sensor diaphragm deflecting dependent on the pressure of the sensed fluid. When the sensor is subjected to a fluid under pressure, the sensor diaphragm deflects and the distance between the electrodes is affect. The ceramic sensor diaphragm may additional be provided with a thin steel membrane or plate and a coating, such as a polytetrafluoroetylen (PTFE) coating, to protect the part of the sensor in contact with the fluid.

Alternatively, the sensor element may be a micro electro-mechanical system sensor (MEMS sensor) or a strain gauge sensor using a plurality of strain gauges to measure changes in the strain of a diaphragm part of the sensor element. In one embodiment a strain gauge based sensor may comprise four strain gauges included in a Wheatstone Bridge circuitry. When diaphragm deflects the strain gauge cause a voltage output across the Wheatstone Bridge indicative of the pressure. As an alternative to foil strain gauges silicon piezoresistive technology or ceramic piezoresistive sensing technology may be used to detect changes in stain in the diaphragm part of the ceramic pressure element.

By including both a pressure sensor and a flow sensor in the electronic flow meter, the meter may be configured to operate the pressure sensor dependent on the flow rate and the flow sensor dependent on the pressure. Detected changes in pressure may thus be used as a trigger for measuring the flow rate. Similar, changes in flow rate may be used as a trigger for measuring pressure. Especially, the flow sensor may be used to determine periods with no flow through the flow tube and the pressure sensor may be activated to measure pressure in these periods. Since flow in the flow tube affects pressure measurements, it is desirable to be able to correlate flow and pressure measurements and to be able to determine the flow at the time of a given pressure measurement.

Referring to Fig. 1 and 3, one embodiment of the electronic flow meter including a sensor element mounted on the main PCB 42 is shown. The sensor element is mounted on the downwards facing side 421 of the main PCB arranged inside the electronics housing facing towards the flow tube. The sensor element is mounted as a surface-mounted device, i.e. placed directly onto the surface of the main PCB, during mounting of components on the PCB. This allows for a highly automated manufacturing process reducing complexity and cost. An electronic measurement circuit 52 associated with the sensor element is arranged on either the downwards facing side 421 or the opposite upper facing side 422 of the main PCB. The electronic measurement circuit is electrically connected to a central processing unit mounted on the main PCB and configured for transforming the response of the sensor element into a signal indicative of the pressure in the flow channel.

Above the sensor element, the main PCB is provided with cut-outs 43 allowing the backing device to engage directly with the sensor element. Applying the pressure of the backing device directly to the sensor element allows for an increased compression pressure to be applied to the sealing element 55 arranged between the sensor element and the inner surface of in the electronic housing.

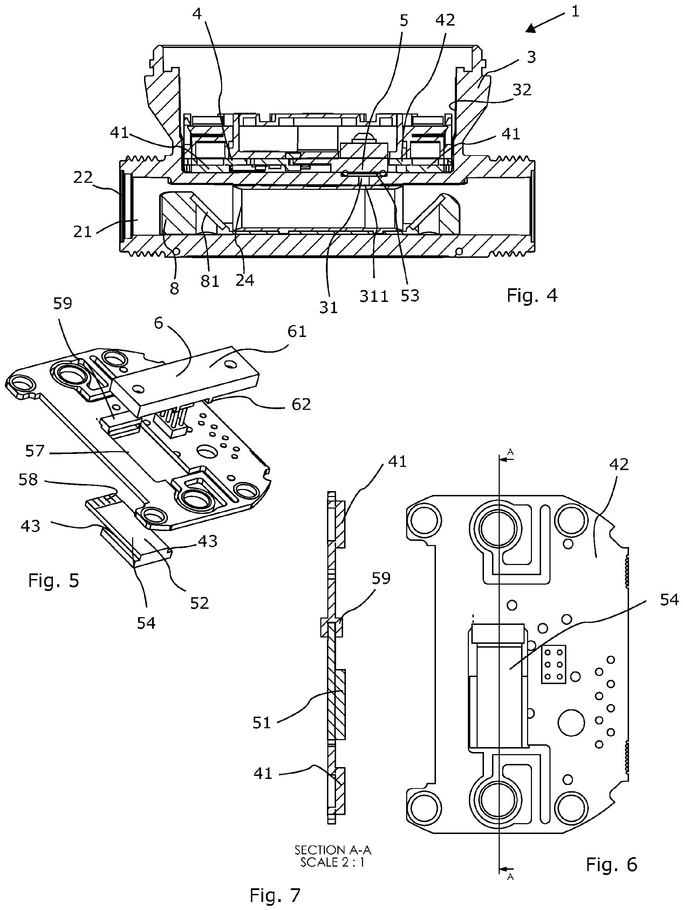

Fig. 4 -7 illustrates an embodiment of the electronic flow meter wherein the sensor element and its associated measurement circuit is mounted on a dedicated sensor printed circuit board (PCB) 54 electrically connected to the main PCB. The main PCB is provided with a cut-out 57 for receiving the sensor PCB 54 and a socket 59 for electrically connecting the sensor PCB to the main PCB. The sensor PCB includes a plug or contact face 58, such an edge connector, configured for engaging the socket on the main PCB. When the sensor PCB is mounted in the socket, the sensor- and main PCBs are substantially arranged in the same plane, aligning a downwards facing surface of the sensor element and the ultrasound transducers. The cut-out for the sensor PCB is wider than the sensor PCB allowing the backing device to engage the sensor element. Alternatively, the sensor element may be arranged on the sensor PCB and measurement circuit associated with the sensor element may be arranged on the main PCB.

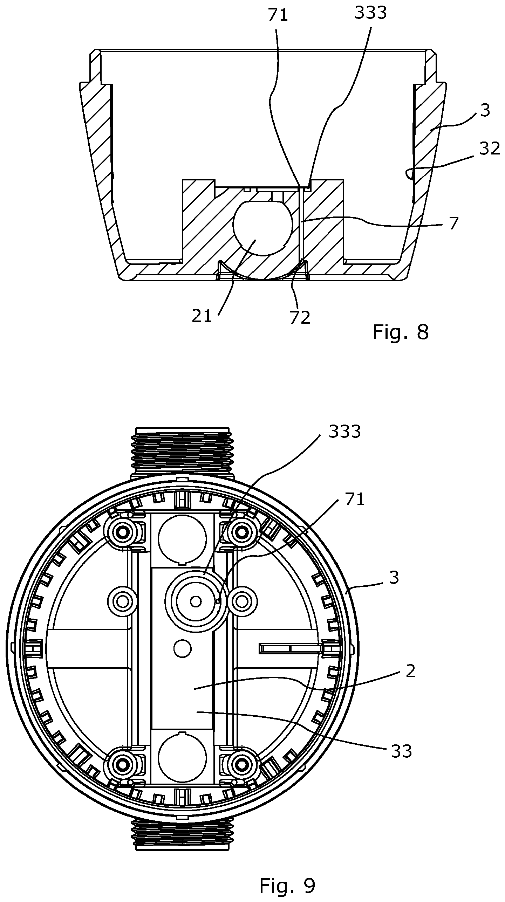

In the embodiments shown in figures 1-3 and 4-7, respectively, the sealing element 55 is arranged in a circular recess 332 provided in the inner surface of the electronics housing. A fluid chamber is thus provided between the ceramic pressure element and the recess 332, into which pressurized fluid from the flow tube may be introduced. As seen from Fig. 8 and Fig. 9, a drain channel 7 may be provided to drain away any fluids that may escape the sealing element 55. A drain channel inlet 71 is provided outside a periphery of the sealing element. To contain and guide any fluids that might have escaped the sealing element towards the drain channel, an additional sealing element may be provided in a circumferential recess 333 provided around the circular recess providing the fluid chamber. The drain channel extends through the wall of the flow tube to an outlet 72 provided in an external surface of the flow tube or electronics chamber.

The backing device includes a rigid force carrying member 61 adapted for being joined with the electronics housing, e.g. by screws and corresponding bosses provided as in integrated part of the electronics housing. Studs 62 adapted to engage the sensor element extend for the for carrying member allowing a certain backing force to be applied to the sensor element.

Furthermore, the top-side sensor element may be provided with a protective membrane serving to prevent sedimentation on the sensor element. Such protective membrane may have a thickness from 100-500 microns only serving to protect the ceramic element without affecting sensor precision. The protective membrane may in one embodiment be an integrated part of the electronics housing formed by the same material as the electronic housing by through injection molding. Alternatively, the protective membrane may be arranged as an insert in the injection molded electronics housing.

The electronic flow meter further comprises a self-contained power source, such as a battery pack (not shown) for powering the central processing unit, the flow sensor and the pressure sensor. The electronic flow meter may further include wireless communication means such as a radio device for communicating with external devices.

As seen from Fig. 1 and 4, the electronic flow meter further comprises a measuring tube 24 arranged in the flow channel. The measuring tube extends between the ultrasound transducer and in the shown embodiment, the measuring tube is mounted on a reflector holding arrangement 8 serving to fixate a pair of reflectors 81 in the flow channel. The reflectors reflect the ultrasound signals transmitted by the ultrasound transducers, such that the ultrasound signals are directed from the transmitting transducer to the opposite transducer being operated as a receiver. Extending along the flow channel, the measuring tube creates a narrow passage along an outer periphery of the flow channel adjacent to an interior surface 25 of the flow tube. This narrow passage may be open in both ends such that a limited amount of fluid may flow on an outside of the measuring tube. Alternatively, the narrow passage may be closed at one end by a fluid tight connection 26 provided between the interior surface of the flow tube and an upstream or downstream end of the flow tube.

As seen from Fig. 1 and 4, an opening 311 of the sensor bore is provided in the interior surface 25 of the flow tube in the narrow passage between the flow tube wall and the measuring tube. By positioning the opening of the sensor bore in this area, the sensor bore and thus the pressure sensor is shielded from pressure surges occurring in the distribution network or the piping installation at the point of consumption. Such pressure surges, also known as water hammer, may be significant and cause sensors and other equipment to be damaged. Still, as the sensor bore is in direct fluid communication with the flow channel, the pressure in the sensor bores is equal to that of the flow channel. Additionally, as flow through the flow tube may affect the static and/or dynamic pressure in the flow tube, pressure measurements performed by the measurement circuit may be controlled by the central processing unit, dependent on the flow sensed via the flow sensor. The central processing unit may correlate flow data and sensor data to identify pressure measurements performed during either static flow conditions where no flow exists or the flow rate is insignificant and various flow conditions subject to different flow rates.

Above, various embodiment of an electronic flow meter including a pressure sensor has been described. The pressure sensor includes a sensor element and an associated electronic measurement circuit mounted on a dedicated sensor PCB. In further embodiments of an electronic flow meter according to the invention, other types of sensors may also be implemented on the dedicated sensor PCB. By providing a sensor on a dedicated sensor PCB electrically connected to the main PCB, e.g. by a socket and edge connectors, the electronic flow meter may easily be equipped with different types of sensors. This modular design also provides the advantage that different sensors may be incorporated into the electronic meter with minimal effect on the remaining parts of the meter electronics, such as the configuration of the main PCB, central processing unit and flow sensor. Other types of sensors may be sensors for measuring biological substances in a fluid, conductivity, such as a conductivity sensor configured for determining the chlorine concentration in a fluid or temperature. Such sensors may include different types of sensor elements mounted on the sensor PCB and dedicated measurement circuits.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

## Claims

1. An electronic flow meter (1) comprising:
- a flow tube (2) provided with flow channel (21) extending between an inlet (22) and an outlet (23)
- an electronics housing (3) arranged in association with the flow tube, wherein a sensor bore (31) in fluid communication with the flow channel is provided in an inner surface (32) of the electronic housing;
- a flow sensor (4) including a pair of ultrasound transducers (41) mounted on a main printed circuit board (42) arranged inside the electronics housing, the flow sensor being configured for measuring a flow rate of a fluid flowing through the flow tube,
- a pressure sensor (5) including a sensor element (51) and an associated electronic measurement circuit (52);
wherein a top-side (53) of the sensor element is arranged opposite the sensor bore in fluid communication with the flow channel via the sensor bore (31) and a backing device (6) is provided to force the sensor element against a sealing element (55) arranged to provide a sealing between the sensor element and the inner surface of in the electronic housing,
**characterized in that** the electronic flowmeter further comprises a measuring tube (24) arranged in the flow channel (21) extending between the ultrasound transducers, and an opening (311) of the sensor bore (31) is provided in an interior surface (25) of the flow tube overlapped by the measuring tube, and
extending along the flow channel, the measuring tube creates a narrow passage along an outer periphery of the flow channel adjacent to the interior surface (25) of the flow tube,
and the opening (311) of the sensor bore is provided in the interior surface of the flow tube in the narrow passage between a flow tube wall and the measuring tube.

2. The electronic flow meter according to claim 1, wherein the sensor element (51) is mounted on the main PCB or a dedicated sensor PCB (54) electrically connected to the main PCB.

3. The electronic flow meter according to claim 1 or 2, wherein the sensor element (51) is mounted on a downwards facing side (421) of the main PCB arranged inside the electronics housing facing towards the flow tube together with two ultrasound transducer elements (41).

4. The electronic flow meter according to any of the preceding claims, wherein the main PCB or the sensor PCB is provided with cut-outs (43) above parts of the sensor element (51) allowing the backing device to engage directly with the sensor element.

5. The electronic flow meter according to any of the preceding claims, wherein the backing device includes a rigid force carrying members (61) provided with studs (62) adapted to engage with the sensor element (51).

6. The electronic flow meter according to any of the preceding claims, wherein the top-side of the sensor element (51) is provided with a protective membrane having a thickness from 100-500 microns.

7. The electronic flow meter according to any of the preceding claims, wherein the sensor element (51) is a ceramic sensor element.

8. The electronic flow meter according to any of the preceding claims, wherein the sensor element (51) is a ceramic capacitive pressure element responsive to changes in ambient pressure.

9. The electronic flow meter according to any of the preceding claims, wherein the sensor bore extends through the wall(s) (33) of the flow tube and electronic housing.

10. The electronic flow meter according to any of the preceding claims, wherein the flow meter further comprises a central processing unit mounted on the printed circuit board, the flow sensor and the pressure sensor being electrically connected to the central processing unit.

11. The electronic flow meter according to any of the preceding claims, wherein the flow meter further comprises a self-contained power source for powering the central processing unit, the flow sensor and the pressure sensor.

12. The electronic flow meter according to any of the preceding claims, wherein a fluid tight connection (26) is provided between the interior surface of the flow tube and an upstream or downstream end of the measuring tube.

13. The electronic flow meter according to any of the preceding claims, wherein the electronics housing and the flow tube are provided as a monolithic polymer structure.

## Patentansprüche

1. Elektronischer Durchflussmesser (1), umfassend:
- ein Durchflussrohr (2), das mit einem Durchflusskanal (21) bereitgestellt ist, der sich zwischen einem Einlass (22) und einem Auslass (23) erstreckt,
- ein Elektronikgehäuse (3), das in Verbindung mit dem Durchflussrohr angeordnet ist, wobei eine Sensorbohrung (31) in Fluidkommunikation mit dem Strömungskanal in einer Innenfläche (32) des Elektronikgehäuses bereitgestellt ist;
- einen Durchflusssensor (4), der ein Paar von Ultraschallwandlern (41) beinhaltet, die an einer Haupt-Leiterplatte (42) montiert sind, die im Inneren des Elektronikgehäuses angeordnet ist, wobei der Strömungssensor zum Messen einer Durchflussrate eines Fluids konfiguriert ist, das durch das Durchflussrohr strömt,
- einen Drucksensor (5), beinhaltend ein Sensorelement (51) und eine assoziierte elektronische Messschaltung (52);
wobei eine Oberseite (53) des Sensorelements gegenüber der Sensorbohrung in Fluidkommunikation mit dem Durchflusskanal über die Sensorbohrung (31) angeordnet ist und eine Stützvorrichtung (6) bereitgestellt ist, um das Sensorelement gegen ein Dichtungselement (55) zu drücken, das angeordnet ist, um eine Abdichtung zwischen dem Sensorelement und der Innenfläche des elektronischen Gehäuses bereitzustellen,
**dadurch gekennzeichnet, dass** der elektronische Durchflussmesser ferner ein Messrohr (24) umfasst, das in dem Durchflusskanal (21) angeordnet ist, der sich zwischen den Ultraschallwandlern erstreckt, und eine Öffnung (311) der Sensorbohrung (31) in einer Innenfläche (25) des Durchflussrohrs bereitgestellt ist, die von dem Messrohr überlappt ist, und
wobei das Messrohr, sich entlang des Strömungskanals erstreckend, einen schmalen Durchlass entlang eines Außenumfangs des Durchflusskanals benachbart zu der Innenfläche (25) des Durchflussrohrs erzeugt und wobei die Öffnung (311) der Sensorbohrung in der Innenfläche des Durchflussrohrs in dem schmalen Durchlass zwischen einer Durchflussrohrwand und dem Messrohr bereitgestellt ist.

2. Elektronischer Durchflussmesser nach Anspruch 1, wobei das Sensorelement (51) auf der Hauptleiterplatte oder einer dedizierten Sensorleiterplatte (54), die elektrisch mit der Hauptleiterplatte verbunden ist, montiert ist.

3. Elektronischer Durchflussmesser nach Anspruch 1 oder 2, wobei das Sensorelement (51) an einer nach unten zeigenden Seite (421) der Hauptleiterplatte montiert ist, angeordnet innerhalb des Elektronikgehäuses mit Ausrichtung hin zu dem Durchflussrohr zusammen mit zwei Ultraschallwandlerelementen (41).

4. Elektronischer Durchflussmesser nach einem der vorhergehenden Ansprüche, wobei die Hauptleiterplatte oder die Sensorleiterplatte mit Ausschnitten (43) über Teilen des Sensorelements (51) bereitgestellt ist, die es der Rückhaltervorrichtung ermöglichen, direkt in das Sensorelement einzugreifen.

5. Elektronischer Durchflussmesser nach einem der vorhergehenden Ansprüche, wobei die Stützvorrichtung starre Kraftübertragungselemente (61) beinhaltet, die mit Zapfen (62) bereitgestellt sind, die dazu angepasst sind, in das Sensorelement (51) einzugreifen.

6. Elektronischer Durchflussmesser nach einem der vorhergehenden Ansprüche, wobei die Oberseite des Sensorelements (51) mit einer Schutzmembran mit einer Dicke von 100-500 Mikrometern bereitgestellt ist.

7. Elektronischer Durchflussmesser nach einem der vorhergehenden Ansprüche, wobei das Sensorelement (51) ein keramisches Sensorelement ist.

8. Elektronischer Durchflussmesser nach einem der vorhergehenden Ansprüche, wobei das Sensorelement (51) ein keramisches kapazitives Druckelement ist, das auf Änderungen des Umgebungsdrucks reagiert.

9. Elektronischer Durchflussmesser nach einem der vorhergehenden Ansprüche, wobei sich die Sensorbohrung durch die Wand/Wände (33) des Durchflussrohrs und des Elektronikgehäuses erstreckt.

10. Elektronischer Durchflussmesser nach einem der vorhergehenden Ansprüche, wobei der Durchflussmesser ferner eine zentrale Verarbeitungseinheit umfasst, die auf der Leiterplatte montiert ist, wobei der Durchflusssensor und der Drucksensor elektrisch mit der zentralen Verarbeitungseinheit verbunden sind.

11. Elektronischer Durchflussmesser nach einem der vorhergehenden Ansprüche, wobei der Durchflussmesser ferner eine eigenständige Leistungsquelle zum Bereitstellen von Leistung für die zentrale Verarbeitungseinheit, den Durchflusssensor und den Drucksensor umfasst.

12. Elektronischer Durchflussmesser nach einem der vorhergehenden Ansprüche, wobei eine fluiddichte Verbindung (26) zwischen der Innenfläche des Durchflussrohrs und einem stromaufwärtigen oder stromabwärtigen Ende des Messrohrs bereitgestellt ist.

13. Elektronischer Durchflussmesser nach einem der vorhergehenden Ansprüche, wobei das Elektronikgehäuse und das Durchflussrohr als eine monolithische Polymerstruktur bereitgestellt sind.

## Revendications

1. Débitmètre électronique (1) comprenant :
- un tube d'écoulement (2) doté d'un canal d'écoulement (21) s'étendant entre une entrée (22) et une sortie (23),
- un boîtier électronique (3) agencé en association avec le tube d'écoulement, un alésage de capteur (31) en communication fluidique avec le canal d'écoulement étant prévu dans une surface interne (32) du boîtier électronique ;
- un capteur d'écoulement (4) comprenant une paire de transducteurs à ultrasons (41) montés sur une carte de circuit imprimé principale (42) agencée à l'intérieur du boîtier électronique, le capteur d'écoulement étant configuré pour mesurer un débit d'un fluide s'écoulant à travers le tube d'écoulement,
- un capteur de pression (5) comprenant un élément capteur (51) et un circuit de mesure électronique associé (52) ;
un côté supérieur (53) de l'élément capteur étant agencé à l'opposé de l'alésage de capteur en communication fluidique avec le canal d'écoulement par l'intermédiaire de l'alésage de capteur (31) et un dispositif de support (6) étant prévu pour forcer l'élément capteur contre un élément d'étanchéité (55) agencé pour assurer une étanchéité entre l'élément capteur et la surface interne du boîtier électronique,
**caractérisé en ce que** le débitmètre électronique comprend en outre un tube de mesure (24) agencé dans le canal d'écoulement (21) s'étendant entre les transducteurs à ultrasons, et une ouverture (311) de l'alésage de capteur (31) est ménagée dans une surface intérieure (25) du tube d'écoulement chevauchée par le tube de mesure, et s'étendant le long du canal d'écoulement, le tube de mesure crée un passage étroit le long d'une périphérie externe du canal d'écoulement adjacent à la surface intérieure (25) du tube d'écoulement, et l'ouverture (311) de l'alésage de capteur est ménagée dans la surface intérieure du tube d'écoulement dans le passage étroit entre une paroi de tube d'écoulement et le tube de mesure.

2. Débitmètre électronique selon la revendication 1, ledit élément capteur (51) étant monté sur la PCB principale ou sur une PCB (54) de capteur dédiée raccordée électriquement à la PCB principale.

3. Débitmètre électronique selon la revendication 1 ou 2, ledit élément capteur (51) étant monté sur un côté orienté vers le bas (421) de la PCB principale agencée à l'intérieur du boîtier électronique orienté vers le tube d'écoulement ensemble avec deux éléments transducteurs à ultrasons (41).

4. Débitmètre électronique selon l'une quelconque des revendications précédentes, ladite PCB principale ou ladite PCB de capteur étant dotée de découpes (43) au-dessus de parties de l'élément capteur (51) permettant au dispositif de support de se mettre en prise directement avec l'élément capteur.

5. Débitmètre électronique selon l'une quelconque des revendications précédentes, ledit dispositif de support comprenant des éléments rigides porteurs de force (61) dotés de goujons (62) adaptés pour se mettre en prise avec l'élément capteur (51).

6. Débitmètre électronique selon l'une quelconque des revendications précédentes, ledit côté supérieur de l'élément capteur (51) étant doté d'une membrane protectrice possédant une épaisseur allant de 100 à 500 microns.

7. Débitmètre électronique selon l'une quelconque des revendications précédentes, ledit élément capteur (51) étant un élément capteur en céramique.

8. Débitmètre électronique selon l'une quelconque des revendications précédentes, ledit élément capteur (51) étant un élément de pression capacitif en céramique sensible aux changements de pression ambiante.

9. Débitmètre électronique selon l'une quelconque des revendications précédentes, ledit alésage de capteur s'étendant à travers la ou les parois (33) du tube d'écoulement et du boîtier électronique.

10. Débitmètre électronique selon l'une quelconque des revendications précédentes, ledit débitmètre comprenant en outre une unité centrale de traitement montée sur la carte de circuit imprimé, le capteur d'écoulement et le capteur de pression étant connectés électriquement à l'unité centrale de traitement.

11. Débitmètre électronique selon l'une quelconque des revendications précédentes, ledit débitmètre comprenant en outre une source d'alimentation autonome pour alimenter l'unité centrale de traitement, le capteur d'écoulement et le capteur de pression.

12. Débitmètre électronique selon l'une quelconque des revendications précédentes, un raccordement étanche aux fluides (26) étant prévu entre la surface intérieure du tube d'écoulement et une extrémité en amont ou en aval du tube de mesure.

13. Débitmètre électronique selon l'une quelconque des revendications précédentes, ledit boîtier électronique et ledit tube d'écoulement étant prévus sous la forme d'une structure polymère monolithique.
